(19) Europäisches Patentamt
European Patent Office
Office européen des brevets

(11) Veröffentlichungsnummer : **0 151 467**
**B1**

(12) # EUROPÄISCHE PATENTSCHRIFT

(45) Veröffentlichungstag der Patentschrift : **14.02.90**

(51) Int. Cl.⁵ : **C 10 M173/02**

(21) Anmeldenummer : **85100971.2**

(22) Anmeldetag : **31.01.85**

(54) **Wässrige Funktionsflüssigkeiten auf der Basis von Polymeren.**

(30) Priorität : **09.02.84 DE 3404537**

(43) Veröffentlichungstag der Anmeldung : **14.08.85 Patentblatt 85/33**

(45) Bekanntmachung des Hinweises auf die Patenterteilung : **14.02.90 Patentblatt 90/07**

(84) Benannte Vertragsstaaten : **AT BE DE FR GB IT NL SE**

(56) Entgegenhaltungen :
**GB-A- 2 029 443**
**US-A- 4 469 611**

(73) Patentinhaber : **HOECHST AKTIENGESELLSCHAFT**
**Postfach 80 03 20**
**D-6230 Frankfurt am Main 80 (DE)**

(72) Erfinder : **Haas, Raimund, Dr.-Ing.**
**Johannesallee 20**
**D-6230 Frankfurt am Main 80 (DE)**
Erfinder : **Engel, Dieter, Dr.**
**Rüsselsheimer Strasse 33**
**D-6092 Kelsterbach (DE)**
Erfinder : **Helwerth, Rainer, Dr.**
**Weidfeldstrasse 58**
**D-6236 Eschborn (DE)**

**EP 0 151 467 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Wäßrige Funktionsflüssigkeiten mit einem Gehalt an wasserlöslichen Polymeren werden in vielen technischen Prozessen eingesetzt, wobei sich die chemische Zusammensetzung des Polymers je nach Einsatzgebiet vielfältig unterscheidet. Unter dem Begriff Funktionsflüssigkeit sollen hier und im folgenden flüssige Systeme verstanden werden, die ganz allgemein eine Funktion ausüben können. In erster Linie sind unter diesem Begriff sogenannte Arbeitsflüssigkeiten wie etwa Hydraulikflüssigkeiten zu verstehen sowie ganz allgemein Metallbearbeitungsflüssigkeiten einschließlich Schmierflüssigkeiten und Korrosionsschutzflüssigkeiten.

Bekannt ist, daß sich wasserlösliche Polymere sowohl zur Formulierung mineralölfreier, vollsynthetischer als auch mineralölarmer, halbsynthetischer Arbeitsflüssigkeiten eignen. Solche mineralölfreien bzw. mineralölarmen und daher schwer brennbaren Hydraulikflüssigkeiten werden in vielen industriellen Bereichen (Bergbau, Aluminium-Druckgußindustrie, Hüttenwerke etc.) aus Sicherheitsgründen benötigt. Daneben stellen Arbeitsflüssigkeiten auf der Basis wasserlöslicher Polymere gegenüber reinen Mineralölformulierungen bei Leckagen eine wesentlich geringere Umweltgefährdung dar. Auch in der Lebensmittelindustrie und in der Textilbranche können solche Funktionsflüssigkeiten gefahrloser eingesetzt werden als reine Mineralöle. Ein weiterer Vorteil derartiger wasserhaltiger Hydraulikflüssigkeiten ist deren Kompatibilität mit Kühl- und Schmiermitteln, die z. B. bei der spanenden Werkstoffbearbeitung eingesetzt werden, und die somit bei Leckagen im Hydraulikkreislauf keine Verunreinigung der Bearbeitungshilfsmittel verursachen.

Die Hauptaufgabe der Polymeren in den wäßrigen Hydraulikformulierungen besteht bisher darin, die Viskosität auf einen solchen Wert einzustellen, daß die erzielte Verdickerwirkung den technischen Erfordernissen entspricht. Verschiedene kommerziell erhältliche Polymerprodukte wie Cellulosederivate, Polyacrylamide, Polyacrylate, Polyglykole oder auch modifizierte Polyether zeigen in bestimmten Molmassen- und Gewichtskonzentrationsbereichen dabei gute bis sehr gute Verdickerwirkungen. Bei vielen synthetisch hergestellten Polymeren wird jedoch die viskositätserhöhende Wirkung durch strömungsmechanisch oder thermisch verursachte Einflüsse rasch gemindert. Desweiteren zeigen viele Polymer-Lösungen bei bereits mäßigen Verdickergehalten starke strukturviskose Strömungsphänomene, die sich im Rheometer meist in einer drastischen Viskositätsabnahme mit steigender Schergeschwindigkeit bzw. bei erhöhter Temperatur des Systems zeigen.

In der US-A-4312775 wird über modifizierte Polyether berichtet, die in Gegenwart von gewissen Additiven wie ethoxilierten Phosphatestern oder Mischungen von Estern mit wasserlöslichen Aminen (0,5-1 %) in einem Gewichtskonzentrationsbereich von 5-10 % sehr gute Verdickerwirkungen zeigen und eine befriedigende Scher- bzw. Temperaturstabilität erreichen. Nachteilig erweist sich jedoch bei einem Test im High-Shear-Viskosimeter die starke Abhängigkeit der Viskosität solcher Polymerlösungen als Funktion der Schergeschwindigkeit D größer als $10^2\ s^{-1}$ sowie die starke Abhängigkeit der Lösungsviskosität von der Meßtemperatur.

In EP-B-0088718 wird ebenfalls über Verdickungsmittel auf Basis von Polyetherderivaten berichtet, die für die Verdickung von natürlichen und synthetischen Oelen, wäßrigen Elektrolytlösungen und wäßrigen, tensidhaltigen Lösungen eingesetzt werden. Die Untersuchungen zur Schergeschwindigkeitsabhängigkeit ($D \leq 30\ s^{-1}$) zeigten, daß bei diesen Verdickern in tensidhaltigen Zubereitungen das rheologische Verhalten newtonsch ist, während bei Verwendung von Kochsalz entsprechende tensidhaltige Zubereitungen ein starkes strukturviskoses Fließverhalten aufwiesen. Die Verdickerkonzentration lag in einem Konzentrationsbereich von 5-10 %.

Bei der auch bekannten Verwendung von wasserlöslichen Polyglykolen liegt die Einsatzkonzentration zur Einstellung der geforderten Viskosität bei wesentlich höheren Werten (25-50 Gew.-%). Bei diesen Polymeren wird ein newtonsches Fließverhalten und z. T. ein gutes Schmier- bzw. Verschleißverhalten beobachtet, während sich hinsichtlich der thermischen Stabilität bei vielen Polyglykoltypen bereits knapp oberhalb 40 °C unerwünschte Trübungs- und Entmischungserscheinungen in wäßriger Phase zeigen. Darüberhinaus besitzen diese Polymertypen von sich aus keinerlei Korrosionsschutzeigenschaften in wäßriger Lösung.

Aufgabe der vorliegenden Erfindung ist es, polymere Additive für wäßrige Funktionsflüssigkeiten zu finden, wobei je nach gewählter Polymerkonzentration die daraus zubereitete wäßrige Flüssigkeit mehrere Aufgaben erfüllen soll, nämlich daß

1. in einem Konzentrationsbereich von 1-20 Gew.-% an Polymerwirksubstanz eine ausreichende Verdickerwirkung der wäßrigen Flüssigkeit erzielt wird,

2. eine ausreichende Scherstabilität der Funktionsflüssigkeit gegenüber hohen Scherbelastungen in fließendem Zustand und quasinewtonsche Fließeigenschaften in einem möglichst großen Schergeschwindigkeitsbereich erreicht werden,

3. ein günstiges Viskositäts-Temperatur-Verhalten, d. h. eine möglichst gering abfallende Viskosität mit steigender Temperatur erzielt wird,

4. die durch Polymerzugabe entstehende Funktionsflüssigkeit gegenüber der unverdickten Flüssigkeit ein verbessertes Schmier- und Korrosionsschutzverhalten aufweist,

5. die Funktionsflüssigkeit unempfindlich gegenüber den Härtebildnern des Wassers ist.

Überraschenderweise wurde nun gefunden, daß wäßrige Flussigkeiten dann diese Eigenschaften aufweisen, wenn man die im folgenden beschriebenen Copolymere beimischt.

Gegenstand der Erfindung sind wäßrige Funktionsflüssigkeiten mit einem Gehalt an Copolymerisaten, hergestellt durch radikalisch initiierte Emulsions- oder Lösungscopolymerisation ungesättigter copolymerisationsfähiger Monomerer sowie gegebenenfalls nachfolgender teilweiser oder vollständiger Neutralisation der freien Säuregruppen der Copolymerisate durch Zusatz von Basen, wobei die Copolymerisate aus

a) 1-60 Gew.-% bevorzugt 5-45. Gew.-% ethylenisch ungesättigten ($C_3$-$C_5$)-Monocarbonsäuren, ethylenisch ungesättigten ($C_4$-$C_6$)-Dicarbonsäuren oder deren Halbestern mit aliphatischen ($C_1$-$C_8$)-Alkoholen oder Gemischen dieser Monomeren, vorzugsweise Methacrylsäure, Acrylsäure, Crotonsäure, Maleinsäure, Maleinsäuremonoalkylester oder deren Gemischen, und

b) 0,5-30 Gew.-% eines grenzflächenaktiven ungestättigten Esters der allgemeinen Formel I,

$$R^1-CH=C(R^2)-C(=O)-O-(CH_2-CH_2-O)_n-R \qquad (I)$$

worin n eine Zahl von 2 bis 100, $R^1$ und $R^2$ Wasserstoff oder Methyl, vorzugsweise $R^1$ Methyl und $R^2$ Wasserstoff, und

R einen aliphatischen ($C_2$-$C_{30}$)-Rest, der linear oder verzweigt sein kann, einen Mono-, Di- oder Trialkylphenylrest mit Alkylgruppen von jeweils 4 bis 12 C-Atomen, einen blockcopolymeren Rest der Formeln IIa oder IIb,

$$-(CH(CH_3)-CH_2-O)_m-(CH_2-CH_2-O)_p-R^3 \qquad (IIa)$$

$$-(CH_2-CH(CH_3)-O)_m-(CH_2-CH_2-O)_p-R^3 \qquad (IIb)$$

in denen m eine Zahl von 10 bis 100, p eine Zahl von 0 bis 100 und

$R^3$ H, Crotyl, ($C_1$-$C_{20}$)-Alkyl, Phenyl, Alkylphenyl mit ($C_1$-$C_{20}$)-Alkylgruppen darstellen, oder einen perfluorierten oder teilweise fluorierten ($C_1$-$C_{16}$)-Alkylrest bedeutet, und

c) 30-85 Gew.-% Methacrylsäureester oder Acrylsäureester von aliphatischen ($C_1$-$C_{18}$)-Alkoholen oder einer Mischung dieser Ester, und

d) 0-40 Gew.-% anderer ethylenisch ungesättigter Comonomeren, vorzugsweise Vinylester, Vinylaromaten, ethylenisch ungesättigte Nitrile, Ester von ethylenisch ungesättigten Mono- und Dicarbonsäuren, sofern sie nicht bereits oben unter c) aufgeführt sind, ethylenisch ungesättigte Sulfonsäuren bzw. ethylenisch ungesättigte Sulfonsäurederivate, und

e) 0-3 Gew.-% mehrfach ethylenisch ungesättigten Verbindungen, vorzugsweise Divinylbenzol, Diallylphthalat, Butandioldiacrylat bzw. -dimethacrylat, und

f) 0-5 Gew.-% Molekulargewichtsreglern, vorzugsweise Dodecylmercaptan, Tetrakismercaptocetylpentaerythrit, Tetrachlorkohlenstoff oder Bromtrichlormethan, aufgebaut sind.

Bei teilweiser oder vollständiger Neutralisation werden die Copolymerisate zunehmend bis vollständig wasserlöslich oder in Wasser kolloidal dispergierbar. In teilweise bzw. vollständig neutralisierter Form können sie als Verdicker wäßriger Systeme mit rheologiemodifizierenden Eigenschaften im oben angegebenen Sinne verwendet werden.

Eine bevorzugte Anwendungsmethode für die genannten Copolymerisate besteht z. B. darin, daß man sie in ihrer nichtneutralisierten und im allgemeinen wasserunlöslichen Säureform als Lösungen in geeigneten Lösungsmitteln oder insbesondere als niedrigviskose wäßrige Dispersionen dem zu verdickenden wäßrigen bzw. wasserhaltigen System zumischt und das resultierende Gemisch anschließend mit Basen teilweise oder vollständig neutralisiert, so daß die Copolymerisate unter Entfaltung ihrer Verdickungs- und rheologiemodifizierenden Wirkung in eine wasserlösliche Salzform ungewandelt werden.

Unter den Verbindungen der Komponente (a) der Copolymerisate sind z. B. Crotonsäure, Maleinsäure, Itaconsäure sowie Maleinsäurehalbester und Itaconsäurehalbester von geradkettigen oder verzweigten ($C_1$-$C_8$)-Alkoholen bevorzugt. Besonders bevorzugt sind Acrylsäure und Methacrylsäure.

Bei den Monomeren der Komponente (b) sind unter den Verbindungen der Formel I diejenigen bevorzugt mit n = 10-80, insbesondere mit n = 20-50, ferner sind diejenigen bevorzugt mit

R = n- oder iso-($C_2$-$C_{30}$)-Alkyl, vorzugsweise ($C_{12}$-$C_{20}$)-Alkyl, insbesondere ($C_{16}$-$C_{18}$)-Alkyl, wie z. B. n- oder iso-Octyl, n- oder iso-Decyl, n- oder iso-Dodecyl, n- oder iso-Hexadecyl, n- oder iso-Octadecyl

oder Gemische dieser Reste, so daß sich beispielsweise Crotonsäureester mit 10 Ethylenoxideinheiten und einem $C_{12}$-Alkylrest, oder mit 20-Ethylenoxideinheiten und einem iso-Octyl-Rest, oder mit 50 Ethylenoxideinheiten und einem $C_{18}$-Alkylrest ergeben können, oder

Monoalkylphenyl mit ($C_4$-$C_{12}$) n- oder iso-Alkylgruppen vorzugsweise $C_8$- oder $C_9$ n- oder iso-Alkylgruppen, wie z. B. iso-Octylphenyl oder iso-Nonylphenyl, mit denen sich beispielsweise Crotonsäureester mit 5 Ethylenoxideinheiten und einem iso-Octylphenylrest, oder mit 11 Ethylenoxideinheiten und einem iso-Nonylphenylrest ergeben können, oder

Dialkylphenyl mit ($C_4$-$C_{12}$) n- oder iso-Alkylgruppen, wie z. B. Diisobutylphenyl, Diisooctylphenyl, Diisononylphenyl, mit denen sich beispielsweise Crotonsäureester mit 20 Ethylenoxideinheiten und einem Diisobutylphenylrest, oder 50 Ethylenoxideinheiten und einem Diisooctylphenylrest, oder 80 Ethylenoxideinheiten und einem Diisononylphenylrest ergeben können, oder

Trialkylphenyl mit ($C_4$-$C_{12}$) n- oder iso-Alkylgruppen, wie z. B. Triisobutylphenyl, Triisooctylphenyl oder Triisononylphenyl, mit denen sich beispielsweise Crotonsäureester aus 11 Ethylenoxideinheiten und einem Triisobutylphenylrest, oder 23 Ethylenoxideinheiten und einem Triisononylphenylrest, oder 50 Ethylenoxideinheiten und einem Triisooctylphenylrest ergeben können, oder einem Rest der Formeln IIa oder IIb,

$$-(\underset{CH_3}{CH}-CH_2-O)_m-(CH_2-CH_2-O)_p-R^3 \qquad \text{(IIa)}$$

$$-(CH_2-\underset{CH_3}{CH}-O)_m-(CH_2-CH_2-O)_p-R^3 \qquad \text{(IIb)}$$

vorzugsweise einem solchen mit m = 20-80 und p = 0-80, insbesondere 0-50, und vorzugsweise $R^3$ = H, ($C_1$-$C_{20}$) n- oder iso-Alkyl, n- oder iso-Alkylphenyl mit ($C_1$-$C_{20}$)-Alkylgruppen, Phenyl oder Crotyl, wobei sich Crotonsäureester von Ethylenoxid-Propylenoxid-Copolymeren mit beispielsweise p = 20, m = 20 und einem iso-Butylrest, oder p = 30, m = 40 und einem Crotylrest, oder p = 50 und m = 80, oder m = 20, p = 0 und einem Nonylphenylrest ergeben können, oder ($C_2$-$C_{16}$)-Perfluoralkyl- bzw. teilweise fluoriertes Alkyl.

Es können auch Gemische der genannten Monomeren eingesetzt werden, wobei zu berücksichtigen ist, daß die einzusetzenden Verbindungen in der Regel aus technischen Vorprodukten hergestellt werden, die z. B. hinsichtlich ihrer Oxethylierungsgrade bzw. ihrer Molekulargewichtsverteilung eine gewisse Verteilungsbreite aufweisen können.

Unter den Verbindungen der Komponente (c) sind Acrylsäure- und Methacrylsäure-methyl, -ethyl-, isopropyl-, -isobutyl-, -tert. Butyl- und -n-butylester bevorzugt. Besonders bevorzugt sind die Methyl- und Ethylester der Acryl- bzw. Methacrylsäure.

Unter den Verbindungen der Komponente (d) sind besonders geeignet: Vinylester von ($C_1$-$C_{12}$)-Carbonsäuren wie Essigsäure, Propionsäure, 2-Ethylhexansäure, Versaticsäure 9, Versaticsäure 10, Laurinsäure, ferner ungesättigte aromatische Verbindungen wie Styrol oder Vinyltoluol, ferner Ester ungesättigter Mono- und Dicarbonsäuren mit $C_8$- oder höheren Alkoholen, wie Acryl- und Methacrylsäureester, beispielsweise Dodecylacrylat oder Octadecylmethacrylat, oder Crotonsäureester von ($C_1$-$C_8$)-Alkoholen, wie z. B. Methylcrotonat oder 2-Ethylhexlcrotonat, oder Malein- bzw. Itaconsäureester mit ($C_1$-$C_8$)-Alkoholen, wie z. B. Dimethylmaleinat, Dibutylmaleinat, Di-2-ethylhexylmaleinat, Dimethylitaconat, oder Monoacrylsäureester oder Monomethacrylsäurester von Diolen und Triolen, wie z. B. Ethylenglykol, Butendiol-1,4, Hexandiol-1,6, Glycerin und Trimethylolpropan, oder ungesättigte Nitrile wie Acrylnitril oder Methacrylnitril, oder ungesättigte Sulfonsäuren, vorzugsweise Ethylensulfonsäure oder Acrylamidopropansulfonsäure bzw. vorzugsweise deren Salze, insbesondere Alkali- oder Ammoniumsalze.

Unter den Verbindungen der Komponente (e) sind besonders geeignet: Diallylphthalat, Divinylbenzol, Butandiolmethacrylat, Ethandioldimethacrylat, Hexandioldimethacrylat, Ethandioldiacrylat, Butandioldiacrylat, Hexandioldiacrylat, Pentaerythritoltriacrylat, Trimethylolpropantriacrylat, Tetraethylenglykoldiacrylat, Tripropylenglykoldiacrylat, Trimethylolpropantrimethacrylat.

Ein aus den Komponenten gemäß (a) bis (f) aufgebautes Copolymerisat kann zum Beispiel durch übliche, radikalisch initiierte Lösungscopolymerisation in üblichen Lösungsmitteln, oder auch in Form einer Dispersion durch übliche Emulsionscopolymerisation hergestellt werden. Bei einer Herstellung über Emulsionscopolymerisation liegt der Feststoffgehalt der resultierenden Dispersion vorzugsweise zwischen 10 und 55, insbesondere 25 bis 50 Gew.-%. Bevorzugtes Herstellungsverfahren ist die Emulsionscopolymerisation, wobei bevorzugt das grenzflächenaktive Comonomere (b) in der Wasserphase vorgelegt wird.

Bei der Herstellung durch Lösungscopolymerisation können die üblichen Verfahren zur Copolymerisation in organischen Medien mit radikalischen Initiatoren angewendet werden. Im Fall der Emulsionscopolymerisation kann ebenfalls nach üblichen Methoden verfahren werden, d. h. es können die üblichen

ionogenen und nichtionogenen Emulgatoren zur Emulgierung der Monomeren und zur Stabilisierung des Latex eingesetzt werden. Als anionische Emulgatoren kommen z. B. infrage : Alkylsulfate, Alkylarylsulfate, Alkylarylsulfonate, Alkali- und/oder Ammoniumsalze von Alkyl- bzw. Alkylarylpolyglykolethersulfaten, als nichtionogene Emulgatoren kommen z. B. infrage : oxethylierte Fettalkohole oder oxethylierte Alkylphenole. Die eingesetzte Emulgatormenge beträgt im allgemeinen 0,3-5 Gew.-%, bezogen auf das Gesamtmonomerengewicht.

In beiden Fällen kann das fertige Copolymer gegebenenfalls durch Neutralisation mit Basen, vorzugsweise mit Alkali-, Ammonium- oder Amin-Basen in ein wasserlösliches oder in Wasser kolloidal dispergierbares Copolymerisatsalz überführt werden.

Bei der Auswahl von Art und Mengenverhältnissen der Comonomeren (a) bis (e) sind u. a. folgende Gesichtspunkte zu beachten. Die Verwendung der als Komponente (a) aufgeführten ungesättigten Carbonsäuren trägt dazu bei, die leichte Dispergierbarkeit der Copolymerisate in wäßriger Dispersion zu gewährleisten. In teilweise oder vollständig neutralisierter Form trägt die Komponente (a) außerdem u. a. entscheidend zur Erzielung der Wasserlöslichkeit bzw. der wäßrig-kolloidalen Dispergierbarkeit der Copolymerisatsalze bei.

Die Komponente (b) ist bei den Copolymerisaten derjenige Bestandteil, der vermutlich am meisten zur Ausbildung der gewünschten Gesamteigenschaften beiträgt. Da die bevorzugt eingesetzten Crotonsäureester nicht oder nur schlecht mit sich selbst polymerisieren, kann deren Einsatz bei Copolymerisationen nicht zu Segmenten von oberflächenaktiven Crotonsäureestern im Copolymerisat führen. Durch Variation der Länge der Ethylenoxidkette in dem Crotonsäureester kann die Wirkung des entstandenen Copolymerisats als Verdicker und Rheologiemodifizierer beeinflußt werden. So nimmt z. B. die viskositätssteigernde Wirkung des Copolymerisats in wäßrigen Systemen mit steigender Ethylenoxidkettenlänge zu.

Die relativen Mengen der Komponenten (a) bis (d) können innerhalb eines relativ weiten Rahmens variiert werden.

Sie können vorzugsweise bei (a) 5-45 Gew.-%, (b) 0,5-30 Gew.-%, (c) 30-85 Gew.-% und (d) 0-40 Gew.-% betragen ; besonders bevorzugt sind (a) 5-40 Gew.-%, (b) 1-25 Gew.-%, (c) 40-80 Gew.-% und (d) 0-35 Gew.-% ganz besonders bevorzugt sind (a) 8-40 Gew.-%, (b) 3-20 Gew.-% (c) 50-75 Gew.-% und (d) 0-30 Gew.-%.

Zur Initiierung der Emulsionscopolymerisation werden vorzugsweise übliche, Radikalketten startende wasserlösliche Initiatoren in Mengen von 0,01-2 Gew.-%, bezogen auf die Gesamtmonomerenmenge, eingesetzt. Beispiele dazu sind u. a. Alkali- oder Ammoniumpersulfat. Die Polymerisationstemperatur wird entsprechend den Halbwertszeiten der Initiatoren in üblicher Weise eingestellt.

Zur Steigerung der Verdickerkapazität bzw. zur weiteren Beeinflussung der rheologischen Eigenschaften der gelösten Copolymerisate in wäßrigen Systemen kann es in manchen Fällen vorteilhaft sein, wenn eine mehrfach ethylenisch ungesättigte Verbindung als Comonomeres mitverwendet wird. Als solche können vernetzende Comonomere, wie z. B. Diallylphthalat, Divinylbenzol, Allylmethacrylat oder Ethylenglykoldimethacrylat verwendet werden. Die eingesetzten Mengen können innerhalb eines Bereiches von 0-3 Gew.-%, vorzugsweise 0-1 Gew.-%, bezogen auf die Gesamtmonomerenmenge, variiert werden. Während der Polymerisation bilden sich Verzweigungen oder Netzwerke aus, die nach dem mehr oder weniger vollständigen Neutralisieren des Copolymerisats zur Bildung von Gelstrukturen und damit zu Ausbildung spezifischer rheologischer Eigenschaftsprofile führen können.

Die Verwendung von Molekulargewichtsreglern während der Copolymerisation führt schließlich zu niedrigeren Molekulargewichten der Copolymerisate. Damit sinkt die Viskosität der wäßrigen Lösungen derartiger Copolymerisate, verglichen mit den ungeregelten Produkten. Man kann auf diese Weise die Möglichkeit verbessern, die erforderliche Balance zwischen Scherviskosität und Scherstabilität der zubereiteten Funktionsflüssigkeiten für spezielle Anwendungssysteme gezielt einzustellen. Als Regler können alle Verbindungen eingesetzt werden, die radikalübertragende Eigenschaften besitzen. Beispiele dazu sind vorzugsweise Mercaptane (ein- und mehrfunktionelle) wie z. B. n- bzw. t-Dodecylmercaptan, Tetrakismercaptoacetylpentaerythrit, Thioglykolsäure. Es können aber auch andere Verbindungen als Regler eingesetzt werden, wie z. B. α-Methylstyrol, Toluol, Trichlorbrommethan, Tetrachlorkohlenstoff. Die Menge des eingesetzten Reglers kann dabei innerhalb eines Bereiches von 0-5 Gew.-%, bezogen auf die Gesamtmonomerenmenge, variiert werden.

Eine zusätzliche Beeinflussung der Verdickerkapazität der Copolymerisate kann durch (weiteren) Zusatz von ionischen oder nichtionischen Emulgatoren zum wäßrigen System, insbesondere vor, aber auch nach erfolgter Neutralisation der freien Säuregruppen des Copolymerisats, erzielt werden.

Es zeigte sich nun überraschenderweise, daß die beschriebenen Copolymerisate bzw. Copolymerisatsalze oder -partialsalze in wäßriger Lösung deutlich höhere Verdickerkapazitäten besitzen als vergleichbare Copolymerisate bzw. deren Salze, die unter identischen Bedingungen ohne die entsprechenden ungesättigten grenzflächenaktiven Ester hergestellt worden sind. Dabei konnte die bessere Verdickerkapazität der Copolymerisate sowohl im High-Shear Bereich (Schergradient $D = 10\,000\ s^{-1}$) als auch in Low-Shear Bereich ($D = 0{,}1\ s^{-1}$) beobachtet werden. Dies hat u. a. den Vorteil, daß der Verdicker für die erfindungsgemäßen Funktionsflüssigkeiten in geringeren Mengen benötigt wird, um wäßrigen Systemen bestimmte rheologische und physikalisch-chemische Eigenschaften zu vermitteln.

Die Anwendung der beschriebenen Copolymerisate erfolgt vorzugsweise in deren teilweise oder

vollständig mit Basen neutralisierten wasserlöslichen oder in Wasser kolloidal dispergierbaren Form. Während die Copolymerisate in ihrer freien Säureform vorzugsweise wasserunlösliche Produkte darstellen, sind ihre Salze mit Basen, insbesondere die Alkali-, Ammonium- oder Aminsalze, klar wasserlöslich oder in kolloidaler Form in Wasser dispergierbar.

Die beschriebenen Copolymerisate haben nicht nur eine verdickende Wirkung, sondern wirken auch als Korrosionsschutzmittel, Schmier- und Verschleißschutzmittel und Kavitationsinhibitoren und eignen sich wegen dieser breiten Wirkung für eine Vielzahl von Funktionsflüssigkeiten. Zur Herstellung dieser Funktionsflüssigkeiten kann man entweder die Copolymerisate, die in Form niedrig viskoser Dispersionen oder als Lösungen in einem geeigneten Lösemittel vorliegen, direkt mit Wasser verdünnen unter Zugabe eventueller weiterer Substanzen oder man stellt zunächst sogenannte Vorformulierungen her, die das Copolymerisat in konzentrierter Form enthalten, und die dann weiter verdünnt werden. Um die gewünschte Verdickerwirkung zu erreichen, muß durch Zugabe von Basen ein pH-Wert von 5,5 bis 10,5, insbesondere 7 bis 9 eingestellt werden. Hierzu können beispielsweise Ammonium-, Alkali- und Erdalkalihydroxide sowie organische Amine genommen werden. Bevorzugte Amine sind Alkanolamine wie Triethanolamin, Diethanolamin, Monoethanolamin und Triisopropylamin.

Die Art und Zusammensetzung der Vorformulierung richtet sich danach, welche Art von Funktionsflüssigkeit hergestellt werden soll. Vorteilhafterweise enthält die Vorformulierung in Form einer wäßrigen Lösung, eines Gels oder Paste alle Zusätze, die in der fertigen Funktionsflüssigkeit noch benötigt werden neben den beschriebenen Copolymerisaten. Hierzu gehören vor allem übliche Schmiermittelzusätze, Verschleißschutzadditive, weitere Korrosionsinhibitoren und Entschäumer. Desweiteren können die Vorformulierungen, beispielsweise für mineralölfreie Arbeitsflüssigkeiten, Lösungsvermittler wie Glykole und Polyalkylenoxid-Polymerisate sowie wasserlösliche Polyhydroxiverbindungen wie Glycerin enthalten. Vorformulierungen für den mineralölarmen Typus der Arbeitsflüssigkeiten (Mikroemulsionen) können zusätzlich übliche Mineralölemulgatoren, Mineralöl und gegebenenfalls auch synthetische Mineralölersatzstoffe wie Esteröle oder Alkylbenzole enthalten.

Die copolymerhaltigen Vorformulierungen gemäß der Erfindung sind in Wasser klar bzw. transparent löslich. Zur Bereitung der wäßrigen Arbeitsflüssigkeiten werden sie in die erforderliche Menge Wasser eingerührt. In allen Fällen beträgt die Endkonzentration der beschriebenen Copolymerisate in den gebrauchsfertigen Funktionsflüssigkeiten ca. 1 bis 40, vorzugsweise 1 bis 20, insbesondere 1 bis 10 Gew.-% für den Fall der Hydraulikflüssigkeiten und bei den Metallbearbeitungsflüssigkeiten beträgt die Endkonzentration 0,3 bis 20, vorzugsweise 0,5 bis 10 Gew.-%.

## Beispiel 1

Synthese des grenzflächenaktiven Crotonsäureesters (b) : 828 g oxethylierter ($C_{16}$-$C_{18}$)-Fettalkohol (n = 50) werden in 828 g Toluol azeotrop getrocknet. Nach ca. 1,5 h werden 55,8 g Crotonsäureanhydrid zugesetzt. Die Lösung wird weitere 2,5 h am Rückfluß gekocht. Nach dem Abkühlen wird das Toluol unter Vakuum abgezogen. Ausbeute : 883 g bräunlich-gelbes, wasserlösliches Produkt von wachsartiger Konsistenz. Die Umsatzkontrolle erfolgte durch Dünnschichtchromatographie.

Analog der obigen Vorschrift für den grenzflächenaktiven Crotonsäureester (b) wurden aus den nachstehend unter (a) und (c) bis (o) aufgeführten oxethylierten Alkoholkomponenten die entsprechenden und gleichfalls grenzflächenaktiven Crotonsäureester (a) bzw. (c) bis (o) hergestellt.

| Alkoholkomponente | Oxethylierungsgrad (mole EO) |
|---|---|
| a) oxethylierter ($C_{18}$-$C_{18}$)-Fettalkohol | 80 |
| b) oxethylierter ($C_{16}$-$C_{18}$)-Fettalkohol | 50 |
| c) oxethylierter ($C_{16}$-$C_{18}$)-Fettalkohol | 25 |
| d) oxethylierter ($C_{16}$-$C_{18}$)-Fettalkohol | 15 |
| e) oxethylierter ($C_{16}$-$C_{18}$)-Fettalkohol | 11 |
| f) oxethyliertes Tributylphenol | 50 |
| g) oxethyliertes Tributylphenol | 30 |
| h) oxethyliertes Tributylphenol | 18 |
| i) oxethylierter ($C_{12}$-$C_{16}$)-Perfluoralkohol | 8 |
| j) oxethylierter ($C_{12}$-$C_{16}$)-Perfluoralkohol | 13 |
| k) oxethyliertes Nonylphenol | 30 |
| l) oxethyliertes Nonylphenol | 23 |
| m) oxethyliertes Nonylphenol | 14 |
| n) oxethyliertes Nonylphenol | 8 |
| o) Crotonester eines Propylenoxid-Ethylenoxid-Blockcopolymeren | |

## Beispiel 2

Synthese von Copolymerisaten durch Emulsionspolymerisation.

Herstellung der Probe 1 :

In einem (2 l) 3-Halskolben mit Rührer, Rückflußkühler und Innenthermomether wurden 28 g des Na-Salzes eines Alkylarylpolyglykolethersulfats (50 gew.-%ig) in 738 g entsalztem Wasser (= E-Wasser) gelöst und unter Rühren auf 80 °C erwärmt. Von einer Initiatorlösung, bestehend aus 0,25 g Ammoniumpersulfat in 50 g E-Wasser, wurden 10 ml zugesetzt sowie 50 g einer Monomermischung, bestehend aus 252 g Ethylacrylat, 63 g Acrylsäure und 35 g grenzflächenaktivem Crotonsäureester (b) aus Beispiel 1. Anschließend wurde der Rest der Monomerenmischung, nach einer halben Stunden beginnend, während zwei Stunden zusammen mit dem Rest der Initiatorlösung zudosiert. Nach Ende der Zudosierung wurde unter Fortsetzung des Rührens noch eine weitere Stunde nachgeheizt und der Ansatz anschließend auf Raumtemperatur gebracht. Feststoffgehalt der Dispersion : 30,1 Gew.-%. Die prozentuale Zusammensetzung des Copolymerisatanteils der Probe 1 ist in Tabelle 1 aufgeführt.

In gleicher Weise wie bei der Probe 1 wurden durch analoge Emulsionspolymerisationen aus den in der Tabelle 1 jeweils aufgeführten Monomerbestandteilen und Mengen die Proben 2 bis 13 gleichfalls in Dispersionsform hergestellt. Die teilweise mitverwendeten Regler und Vernetzer wurden dabei in den angegebenen Mengen, bezogen auf die Gesamtmonomerenmenge, jeweils der Monomerenmischung beigemischt.

Durch Neutralisation der Dispersion mit wäßriger Natronlauge, mit Diethanolamin, Triethanolamin oder wäßrigem Ammoniak konnten die Copolymerisatbestandteile der Proben 1 bis 13 in wasserlösliche Produkte mit den gewünschten Eigenschaften geführt werden.

Tabelle 1

Zusammensetzung der Copolymerisatbestandteile der Dispersionen 1 bis 13 in Gew.-% Monomereinheiten, jeweils bezogen auf das Copolymerisat ohne Regler- und Vernetzeranteile.

| Probe Nr. | Ethylacrylat (Gew.-%) | Acrylsäure (Gew.-%) | Methacrylsäure (Gew.-%) | oberfl.akt. Crotonester aus Bsp. 1(b) (Gew.-%) | Regler: n-Dodecylmercaptan (Gew.-%) | Vernetzer: Divinylbenzol (Gew.-%) |
|---|---|---|---|---|---|---|
| 1 | 72 | 18 | - | 10 | - | - |
| 2 | 72 | 18 | - | 10 | 0,2 | - |
| 3 | 72 | 18 | - | 10 | 0,5 | - |
| 4 | 72 | 18 | - | 10 | 1,0 | - |
| 5 | 80 | 20 | - | - | - | - |
| 6 | 80 | 20 | - | - | 0,2 | - |
| 7 | 55 | 20 | 5 | 20 | 0,2 | - |
| 8 | 50 | 20 | 10 | 20 | 0,2 | - |
| 9 | 40 | 20 | 20 | 20 | 0,2 | - |
| 10 | 72 | 18 | - | 10 | 0,2 | 0,25 |
| 11 | 72 | 18 | - | 10 | 0,2 | 0,5 |
| 12 | 72 | 18 | - | 10 | 0,2 | 1,0 |
| 13 | 50 | - | 40 | 10 | 0,3 | - |

Beispiel 3

Nach der in Beispiel 2 angegebenen Rezeptur werden weitere Copolymerisate durch Emulsionspolymerisation hergestellt (Proben 14-35).

(Siehe Tabelle 2 Seite 8 f.)

Tabelle 2

| Proben-Nr. | Ethylacrylat (Gew.-%) | Methacrylsäure (Gew.-%) | Acrylsäure (Gew.-%) | Styrol (Gew.-%) | oberflakt. Crot.ester (Nr.) | oberflakt. Crot.ester (Gew.-%) | Regler: n-Dodecylmerc. (Gew.-%) |
|---|---|---|---|---|---|---|---|
| 14 | 50 | 40 | - | - | 1a | 10 | 0,3 |
| 15 | 50 | 40 | - | - | 1f | 10 | 0,3 |
| 16 | 50 | 40 | - | - | 1g | 10 | 0,3 |
| 17 | 50 | 40 | - | - | 1h | 10 | 0,3 |
| 18 | 50 | 40 | - | - | 1h | 10 | 0,2 |
| 19 | 50 | 40 | - | - | 1h | 10 | 0,1 |
| 20 | 50 | 40 | - | - | 1g | 10 | 0,1 |
| 21 | 50 | 40 | - | - | 1g | 10 | 0,2 |
| 22 | 40 | 45 | - | - | 1g | 15 | - |
| 23 | 40 | 40 | - | - | 1i | 20 | 0,1 |
| 24 | 30 | 40 | - | - | 1c | 30 | 0,5 |
| 25 | 45 | 35 | - | - | 1h | 15 | 0,3 |
| 26 | 50 | 45 | - | - | 1f | 5 | 0,2 |
| 27 | 60 | 30 | - | - | 1e | 20 | - |
| 28 | 45 | 25 | - | - | 1j | 30 | 0,2 |
| 29 | - | - | 10 | 80 | 1f | 10 | 0,2 |
| 30 | - | - | 20 | 70 | 1f | 10 | 0,2 |
| 31 | - | 20 | 10 | 60 | 1f | 10 | 0,2 |
| 32 | - | 40 | - | 55 | 1h | 5 | 0,1 |
| 33 | - | 30 | - | 65 | 1h | 5 | 0,3 |
| 34 | - | 40 | - | 40 | 1m | 20 | 0,2 |
| 35 | - | 35 | - | 45 | 1g | 10 | - |

Beispiel 4

Aus den nach Beispiel 2 und 3 hergestellten Emulsionspolymerisaten mit einem Gehalt von jeweils ca. 30 Gew.-% an Verdicker werden die Proben 13, 14, 16 und 20 ausgewählt, um wäßrige Lösungen herzustellen, die 5 bzw. 10 Gew.-% Verdicker, 4 Gew.-% Triethanolamin (TEA) und 86 bzw. 91 Gew.-% Wasser enthalten. Für eine Endmischung von 100 g wird jeweils 4 g TEA in die hierzu erforderliche Restwassermenge aufgelöst und das jeweilige Emulsionspolymerisat unter Rühren zugegeben. Es entstehen daraus wasserklare bis leicht trübe Flüssigkeiten mit hoher Viskosität. Die Viskosität dieser Lösungen wird mit einem Low-Shear-Viskosimeter, Contraves LS 30, bei einer Schergeschwindigkeit $D \leq 100\ s^{-1}$ bestimmt. Die Viskositätsmeßergebnisse sind in Tabelle 3 für $T = 25\,°C$ und $50\,°C$ in Abhängigkeit von der Konzentration an Verdicker angegeben. Als Vergleichswerte sind die Viskosität einer 4 gew.-%igen unverdickten TEA/Wasserlösung sowie die Viskosität einer 5, 10 bzw. 20 gew.-%igen Polyglykol (Ethylenoxid/Propylenoxid-Verhältnis 4 : 1, Molekulargewicht 20 000)-Lösung in Wasser mit 4 Gew.-% TEA bei den entsprechenden Temperaturen angegeben. Der pH-Wert der Lösungen ist in Tabelle 3 ebenfalls angegeben.

(Siehe Tabelle 3 Seite 9 f.)

Tabelle 3
Viskositätsmeßergebnisse wäßriger Funktionsflüssigkeiten

| Verdicker Proben-Nr. | Konzentr. (Gew.-%) | TEA (Gew.-%) | Gesamtwasser a) Verdicker-dispersion | Gesamtwasser b) Restwasser | Temp. (°C) | pH | Viskosität bei $D < 100\ s^{-1}$ (mPas) | $\eta_{50°C}/\eta_{25°C}$ |
|---|---|---|---|---|---|---|---|---|
| ohne | | | | | 25 | 9,34 | 1,0 | |
| Verdicker | - | 4 | - | 96 | 50 | - | 0,64 | 64,0 % |
| | | | | | 25 | 7,53 | 114 | |
| 13 | 5 | 4 | 11,7 | 79,3 | 50 | - | 46 | 40,4 % |
| | | | | | 25 | 5,99 | 686 | |
| 13 | 10 | 4 | 23,3 | 62,7 | 50 | - | 168 | 24,5 % |
| | | | | | 25 | 7,45 | 132 | |
| 14 | 5 | 4 | 11,7 | 79,3 | 50 | - | 53 | 40,2 % |
| | | | | | 25 | 5,94 | 899 | |
| 14 | 10 | 4 | 23,3 | 62,7 | 50 | - | 205 | 22,8 % |
| | | | | | 25 | 7,58 | 98 | |
| 16 | 5 | 4 | 11,7 | 79,3 | 50 | - | 50 | 51,0 % |
| | | | | | 25 | 6,01 | 1003 | |
| 16 | 10 | 4 | 23,3 | 62,7 | 50 | - | 285 | 28,4 % |
| | | | | | 25 | 7,58 | 180 | |
| 20 | 5 | 4 | 11,7 | 79,3 | 50 | - | 90 | 50,0 % |
| | | | | | 25 | 6,03 | 1470 | |
| 20 | 10 | 4 | 23,3 | 62,7 | 50 | - | 477 | 32,5 % |
| EO/PO-Misch- | | | | | 25 | 9,40 | 3,3 | |
| polymerisat | 5 | 4 | - | 91,0 | 50 | - | 1,8 | 54,5 % |
| CEO:PO= 4:1 | | | | | 25 | 9,50 | 8,4 | |
| MG ca. 20000 | 10 | 4 | - | 86,0 | 50 | - | 4,3 | 51,2 % |
| | | | | | 25 | | 33,6 | |
| | 20 | 4 | - | 76,0 | 50 | 9,64 | 17,0 | 50,6 % |

Beispiel 5

Mit einer Reihe der in Beispiel 2 und 3 beschriebenen Polymerisaten mit einem Gehalt von jeweils ca. 30 Gew.-% an Feststoff werden wäßrige Flüssigkeiten folgender Zusammensetzung hergestellt: 1 Gew.-% Ethylenoxid/Propylenoxid-Blockpolymerisat, 2 Gew.-% Triethanolamin, 0,8 Gew.-% Diethanolamin, 1,6 Gew.-% Carbonsäurederivat, 4,5 Gew.-% Verdickerfeststoff und 90,1 Gew.-% Gesamtwasser (10,1 % Wasser aus der Dispersion, 80 % Leitungswasser 20 °dH). In Tabelle 4 sind die Viskositäten der unverdickten und der verdickten Flüssigkeiten angegeben, wobei die Viskositäten für T = 25 °C und 50 °C mit einem KPG-Ubbelohde-Viskosimeter mit hängendem Kugelniveau, DIN 51 562, gemessen werden. Gleichzeitig sind die entsprechenden Daten für ein handelsübliches Produkt, ®Plurasafe P1200, BASF Wyandotte, in Tabelle 4 angegeben, dessen Stammkonzentrat so verdünnt wurde, daß etwa die gleiche Viskosität wie bei den anderen Proben erhalten wurde. Dhies gilt auch für die Mitverwendung dieses Produkts in den folgenden Beispielen 6, 7 und 9. In der letzten Spalte von Tabelle 4 ist das Viskositätenverhältnis $\nu_{50°C}/\nu_{25°C}$ der einzelnen Flüssigkeiten in % angegeben. Eine hohe Prozentzahl ist erwünscht bei gleichzeitig hohen Viskositäten.

(Siehe Tabelle 4 Seite 11 f.)

Beispiel 6

Zur Prüfung der Scherstabilität der in Beispiel 5 beschriebenen Arbeitsflüssigkeiten mit den Polymerisaten Nr. 15 16 und 17 wird das in DIN 51382 beschriebene Prüfgerät herangezogen. Ein Flüssigkeitsvolumen von ca. 170 $cm^3$ der einzelnen Proben wird im Prüfgerät, dessen wesentliche Elemente eine Zweizylinderpumpe und eine auf 40 bar Abspritzdruck eingestellte Einspritzdüse sind, in einer bestimmten Anzahl von Zyklen einer Scherbeanspruchung unterworfen. Vor und nach der Scherbeanspruchung wird die kinematische Viskosität der einzelnen Proben nach DIN 51562, Teil 1 bei einer bestimmten Temperatur gemessen. Das Maß der Scherstabilität der untersuchten Arbeitsflüssigkeiten ist in Tabelle 5 als relativer Viskositätsabfall $(\nu_0 - \nu_1)/\nu_0$ in % angegeben, wobei $\nu_0$ die kinematische Viskosität der ungescherten Proben und $\nu_1$ die kinematische Viskosität der jeweils mit 40 Scherdurchlaufzyklen gescherten Proben darstellen. Positive Werte des relativen Viskositätsabfalls bedeuten hierbei eine Viskositätsabnahme. Zum Vergleich sind Scherversuche mit dem handelsüblichen Produkt Plurasafe P1200, BASF Wyandotte, angegeben.

Beispiel 7

Zur Prüfung der Strukturviskosität der in Beispiel 5 zubereiteten Funktionsflüssigkeiten wird die Flüssigkeit, hergestellt mit Proben-Nr. 17, in einem High-Shear-Viskosimeter (Rotationsviskosimeter, Fa. Haake) untersucht. Die Viskosität dieser Funktionsflüssigkeit wird in Abhängigkeit der Schergeschwindigkeit D bei T = 25 °C ermittelt. Bei D = 1 $s^{-1}$ ergibt sich $\eta_1$ = 60 mPas, bei D = 10 000 $s^{-1}$ beträgt der Viskositätswert $\eta_{10000}$ = 52 mPas oder $\eta_{10000}/\eta_1$ = 86,7 %. Ein handelsübliches Produkt (Plurasafe P1200, BASF Wyandotte) mit vergleichbarer Verdickerwirkung weist folgende Daten auf: $\eta_1$ = 43,2 mPas $\eta_{10000}$ = 27 mPas und $\eta_{10000}/\eta_1$ = 62,5 %.

Tabelle 5

Bestimmung der Scherstabilität von wäßrigen Funktionsflüssigkeiten nach 40 Scherdurchlaufzyklen

| Arbeitsflüssigkeit nach Beispiel 4 mit Proben-Nr. | Temp. (°C) | relative Viskositätsveränderung in % der Anfangsviskosität $\nu_0$ |
|---|---|---|
| 15 | 50 | + 1 |
| 16 | 50 | ± 0 |
| 17 | 50 | ± 0 |
| ®Plurasafe P1200 | 50 | + 8 |

Tabelle 4
Viskositäten von wäßrigen Funktionsflüssigkeiten

| Verdicker Proben-Nr. | Konzentr. (Gew.-%) | Zusätze (Gew.-%) | Gesamtwasser in Gew.-% a) Dispersions-wasser | b) Leitungs-wasser | pH | Temp. (°C) | Viskosität (mm²/s) | $\nu_{50°C}/\nu_{25°C}$ (%) |
|---|---|---|---|---|---|---|---|---|
| ohne Verdicker | - | 5,4 | - | 94,6 | 9,18<br>- | 25<br>50 | 1,11<br>0,71 | 64,0 |
| 15 | 4,5 | 5,4 | 10,1 | 80,0 | 6,87<br>- | 25<br>50 | 101,2<br>22,8 | 22,6 |
| 16 | 4,5 | 5,4 | 10,1 | 80,0 | 6,92<br>- | 25<br>50 | 68,4<br>21,5 | 31,4 |
| 17 | 4,5 | 5,4 | 10,1 | 80,0 | 6,85<br>- | 25<br>50 | 61,2<br>21,2 | 34,6 |
| 18 | 4,5 | 5,4 | 10,1 | 80,0 | 6,76<br>- | 25<br>50 | 48,2<br>17,9 | 37,1 |
| 21 | 4,5 | 5,4 | 10,1 | 80,0 | 6,95<br>- | 25<br>50 | 43,3<br>17,1 | 39,5 |
| | | | | | | | | |
| Plurasafe® P 1200 | 8 | | - | 92,0 | 9,90<br>- | 25<br>50 | 43,2<br>5,4 | 12,5 |

Beispiel 8

Die Korrosionsschutzwirkung der in Beispiel 3 beschriebenen Polymeren wurde in den nachfolgend aufgeführten Beispielen nach DIN 51360, Blatt 2, untersucht und vergleichend beurteilt.

| | |
|---|---|
| Konzentrat ohne Wirksubstanz | 11,0 Gew.-% Diethanolamin<br>11,0 Gew.-% Triethanolamin<br>78,0 Gew.-% Wasser 20 °dH |
| Konzentrat I | 2,7 Gew.-% Wirksubstanz Probe Nr. 15<br>11,0 Gew.-% Diethanolamin<br>11,0 Gew.-% Triethanolamin<br>75,3 Gew.-% Wasser 20 °dH |
| Konzentrat II | 2,7 Gew.-% Wirksubstanz Probe Nr. 16<br>11,0 Gew.-% Diethanolamin<br>11,0 Gew.-% Triethanolamin<br>75,3 Gew.-% Wasser 20 °dH |
| Konzentrat III | 2,7 Gew.-% Wirksubstanz Probe Nr. 17<br>11,0 Gew.-% Diethanolamin<br>11,0 Gew.-% Triethanolamin<br>75,3 Gew.-% Wasser 20 °dH |

Für die Prüfungen wurden wäßrige Zubereitungen mit einem Konzentratgehalt von 3, 5, 8 und 10 Gew.-% verwendet. Als Vergleich wurde als typische, in Zerspanungshilfsmitteln als Korrosionsinhibitor häufig verwendete Carbonsäure die i-Nonanoyl-ε-Aminocapronsäure herangezogen.

| | |
|---|---|
| Vergleichskonzentrat | 2,7 Gew.-% i-Nonanoyl-ε-Aminocapronsäure<br>11,0 Gew.-% Diethanolamin<br>11,0 Gew.-% Triethanolamin<br>75,3 Gew.-% Wasser 20 °dH |

Die Untersuchungsergebnisse sind in Tabelle 6 zusammengestellt. Die Ergebnisse zeigen, daß die erfindungsgemäßen Funktionsflüssigkeiten in vergleichbaren Anwendungskonzentrationen bereits Inhibitoreigenschaften wie spezielle Korrosionsinhibitoren aufweisen.

Tabelle 6

Korrosionsschutzwirkung der in Beispiel 3 beschriebenen Polymeren in wäßriger Lösung.

| Konzentrat (Gew.-%) | 3 | 5 | 8 | 10 |
|---|---|---|---|---|
| Korrosionsgrad gemäß DIN 51360, Blatt 2 | | | | |
| Konzentrat ohne Wirksubstanz | 4 | 3-4 | 3 | 3 |
| Konzentrat I | 4 | 3 | 2 | 0 |
| Konzentrat II | 4 | 2 | 2 | 0 |
| Konzentrat III | 4 | 3 | 1-2 | 0 |
| Vergleichskonzentrat | 4 | 3 | 0 | 0 |

Beispiel 9

Zur Untersuchung der Schmierfähigkeit der erfindungsgemäßen Funktionsflüssigkeiten wurde der sogenannte 4-Kugel-Apparat herangezogen. Das Prinzip der Methode ist in « Fünfter Bericht über Anforderungen und Prüfungen schwer entflammbarer Flüssigkeiten zur hydraulischen Kraftübertragung und Steuerung » der Kommission der Europäischen Gemeinschaften, Luxemburg 1974, beschrieben.

Die Durchführung erfolgte in Versuchen mit wachsender Belastung, wobei die in Teil III — 3.12.6,

Seite 82 vorgeschlagene Testdauer von 10 s auf 1 min erhöht wurde.

Die Ergebnisse sind in Tabelle 7 dargestellt. Sie erläutern die Wirksamkeit der erfindungsgemäßen Funktionsflüssigkeiten. Unter Maximallast soll dabei die letzte Belastung vor Erreichen der Schweißlast verstanden werden. Als Vergleich wurde neben einer handelsüblichen HFC-Hydraulikflüssigkeit auf Basis von Ethylenoxid/Propylenoxid-Mischpolymerisaten eine 8 gew.-%ige Lösung des Handelsproduktes Plurasafe P 1200 der BASF-Wyandotte, sowie eine auf Basis eines Ethylenoxid/Propylenoxid-Mischpolymerisates vom Molekulargewicht 20 000 und einem Ethylenoxid/Propylenoxid-Verhältnis von 4 : 1 hergestellte HFC-Hydraulikflüssigkeit herangezogen.

Die überlegene Schmierfähigkeit der erfindungsgemäßen Funktionsflüssigkeiten wird durch die generell höheren Schweißlastwerte belegt.

(Siehe Tabelle 7 Seite 14 f.)

## Patentansprüche

1. Wäßrige Funktionsflüssigkeiten, gekennzeichnet durch einen Gehalt eines Copolymerisats, hergestellt durch radikalisch initiierte Emulsions- oder Lösungscopolymerisation ungesättigter copolymerisationsfähiger Monomerer sowie gegebenenfalls nachfolgender teilweiser oder vollständiger Neutralisation der freien Säuregruppen der Copolymerisate durch Zusatz von Basen, wobei das Copolymerisat aus

a) 1-60 Gew.-%, vorzugsweise 5-45 Gew.-% ethylenisch ungesättigten ($C_3$-$C_5$)-Monocarbonsäuren, ethylenisch ungesättigten ($C_4$-$C_6$)-Dicarbonsäuren oder deren Halbestern mit aliphatischen ($C_1$-$C_8$)-Alkoholen oder Gemischen dieser Monomeren, vorzugsweise Methacrylsäure, Acrylsäure, Crotonsäure, Maleinsäure, Maleinsäuremonoalkylester oder deren Gemischen, und

b) 0,5-30 Gew.-% eines grenzflächenaktiven ungestättigten Esters der allgemeinen Formel I,

$$R^1-CH=CR^2-\overset{\overset{O}{\|}}{C}-O-(CH_2-CH_2-O)_n-R \qquad (I)$$

worin n eine Zahl von 2 bis 100, $R^1$ und $R^2$ Wasserstoff oder Methyl, vorzugsweise $R^1$ Methyl und $R^2$ Wasserstoff, und

R einen aliphatischen ($C_2$-$C_{30}$)-Rest, der linear oder verzweigt sein kann, einen Mono-, Di- oder Triakylphenylrest mit Alkylgruppen von jeweils 4 bis 12 C-Atomen, einen blockcopolymeren Rest der Formeln IIa oder IIb,

$$-(\underset{\underset{CH_3}{|}}{CH}-CH_2-O)_m-(CH_2-CH_2-O)_p-R^3 \qquad (IIa)$$

$$-(CH_2-\underset{\underset{CH_3}{|}}{CH}-O)_m-(CH_2-CH_2-O)_p-R^3 \qquad (IIb)$$

in denen m eine Zahl von 10 bis 100 p eine Zahl von 0 bis 100 und

$R^3$ H, Crotyl, ($C_1$-$C_{20}$)-Alkyl, Phenyl, Alkylphenyl mit ($C_1$-$C_{20}$)-Alkylgruppen darstellen, oder einen perfluorierten oder teilweise fluorierten ($C_1$-$C_{16}$)-Alyklrest bedeutet, und

c) 30-85 Gew.-% Methacrylsäureester oder Acrylsäureester von aliphatischen ($C_1$-$C_{18}$)-Alkoholen oder einer Mischung dieser Ester, und

d) 0-40 Gew.-% anderer ethylenisch ungesättigter Comonomeren, vorzugsweise Vinylester, Vinylaromaten, ethylenisch ungesättigte Nitrile, Ester von ethylenisch ungesättigten Mono- und Dicarbonsäuren, sofern sie nicht bereits oben unter c) aufgeführt sind, ethylenisch ungesättigte Sulfonsäuren bzw. ethylenisch ungesättigte Sulfonsäurederivate, und

e) 0-3 Gew.-% mehrfach ethylenisch ungesättigten Verbindungen, vorzugsweise Divinylbenzol, Diallylphthalat, Butandioldiacrylat bzw. - dimethacrylat, und

f) 0-5 Gew.-% Molekulargewichtsreglern, vorzugsweise Dodecylmercaptan, Tetrakismercaptocetylpentaerythrit, Tetrachlorkohlenstoff oder Bromtrichlormethan, aufgebaut sind.

2. Wäßrige Funktionsflüssigkeiten nach Anspruch 1, dadurch gekennzeichnet, daß sie ein Copolymerisat enthalten, wobei das Copolymerisat 0,5 bis 30 Gew.-% eines Crotonsäureesters der Formel

Tabelle 7

Schmierfähigkeit der in Beispiel 3 beschriebenen Polymeren in wäßrigen Funktionsflüssigkeiten

| Proben Nr. aus Beispiel 2 + 3 | Geprüfte Rezeptur | Maximallast (kp) | Kalotten-Ø (mm) | Schweißlast (kp) |
|---|---|---|---|---|
| 13 | 4,5 Gew.-% Wirksubstanz<br>4,0 Gew.-% TEA<br>91,5 Gew.-% $H_2O$ 20 °dH | 210 | 1,02 | 220 |
| 16 | 4,5 Gew.-% Wirksubstanz<br>4,0 Gew.-% TEA<br>91,5 Gew.-% $H_2O$ 20 °dH | 240 | 1,06 | 260 |
| 20 | 4,5 Gew.-% Wirksubstanz<br>4,0 Gew.-% TEA<br>91,5 Gew.-% $H_2O$ °dH | 230 | 1,03 | 220 |
| 16 | 13,5 Gew.-% Wirksubstanz<br>5,5 Gew.-% DEA<br>15,0 Gew.-% EG<br>66,0 Gew.-% $H_2O$ 20 °dH | 210 | 1,10 | 220 |
| Vergleich<br>Handelsübliche HFC-Flüssigkeit | | 160 | 0,97 | 180 |
| Vergleich<br>Plurasafe® P 1200 | 8 Gew.-% Plurasafe<br>92 Gew.-% $H_2O$ 20 °dH | 160 | 0,82 | 180 |
| Vergleich<br>EO/PO-Mischpolymerisat (EO:PO= 4:1) MG ca. 20000 | 25 Gew.-% Mischpolymerisat<br>25 Gew.-% Ethylenglykol<br>50 Gew.-% $H_2O$ 20 °dH | 160 | 1,22 | 180 |

$$CH_3—CH = CH_2COO—(CH_2CH_2O)_n—R$$

enthält.

3. Wäßrige Funktionsflüssigkeiten nach Anspruch 1, dadurch gekennzeichnet, daß sie Hydraulikflüssigkeiten darstellen und 1 bis 40 Gew.-% der Copolymerisate enthalten.

4. Wäßrige Funktionsflüssigkeiten nach Anspruch 1, dadurch gekennzeichnet, daß sie Metallbearbeitungsflüssigkeiten darstellen und 0,3 bis 20 Gew.-% der Copolymerisate enthalten.

## Claims

1. An aqueous functional fluid which contains a copolymer prepared by emulsion or solution copolymerization, initiated by free radicals, of unsaturated, copolymerizable monomers and, where relevant, subsequent partial or complete neutralization of the free acid groups of the copolymer by addition of a base, the copolymer being built up from

a) 1-60 % by weight, preferably 5-45 % by weight, of ethylenically unsaturated ($C_3$-$C_5$)-monocarboxylic acids, ethylenically unsaturated ($C_4$-$C_6$)-dicarboxylic acids or monoesters thereof with aliphatic ($C_1$-$C_8$)-alcohols, or mixtures of these monomers, preferably methacrylic acid, acrylic acid, crotonic acid, maleic acid, monoalkyl maleates or mixtures thereof,

b) 0.5 to 30 % by weight of a surface-active, unsaturated ester of the general formula I

$$R^1-CH=CR^2-\overset{O}{\overset{\|}{C}}-O-(CH_2-CH_2-O)_n-R \qquad (I)$$

in which n denotes a number from 2 to 100, $R^1$ and $R^2$ denote hydrogen or methyl, $R^1$ preferably denoting methyl and $R^2$ preferably denoting hydrogen, and

R denotes an aliphatic ($C_2$-$C_{30}$)-radical, which can be linear or branched, a mono-, di- or trialkylphenyl radical with alkyl groups of in each case 4 to 12 carbon atoms or a block-copolymeric radical of the formulae IIa or IIb

$$-(\underset{\displaystyle CH_3}{\underset{|}{CH}}-CH_2-O)_m-(CH_2-CH_2-O)_p-R^3 \qquad (IIa)$$

$$-(CH_2-\underset{\displaystyle CH_3}{\underset{|}{CH}}-O)_m-(CH_2-CH_2-O)_p-R^3 \qquad (IIb)$$

in which m represents a number from 10 to 100, p represents a number from 0 to 100 and

$R^3$ represents H, crotyl, ($C_1$-$C_{20}$)-alkyl, phenyl or alkylphenyl with ($C_1$-$C_{20}$)-alkyl groups, or

R denotes a perfluorinated or partially fluorinated ($C_1$-$C_{16}$)-alkyl radical,

c) 30-85 % by weight of methacrylic acid esters or acrylic acid esters of aliphatic ($C_1$-$C_{18}$)-alcohols or a mixture of these esters,

d) 0-40 % by weight of other ethylenically unsaturated comonomers, preferably vinyl esters, vinylaromatics, ethylenically unsaturated nitriles, esters of ethylenically unsaturated monocarboxylic and dicarboxylic acids, where these have not already been listed above under c), ethylenically unsaturated sulfonic acids or ethylenically unsaturated sulfonic acid derivatives,

e) 0-3 % by weight of polyethylenically unsaturated compounds, preferably divinylbenzene, diallyl phthalate and butanediol diacrylate or dimethacrylate and

f) 0-5 % by weight of molecular weight regulators, preferably dodecylmercaptan, tetrakis-mercaptoacetyl-pentaerythritol, carbon tetrachloride or bromotrichloromethane.

2. An aqueous functional fluid as claimed in claim 1, which contains a copolymer containing 0.5 to 30 % by weight of a crotonic acid ester of the formula

$$CH_3—CH = CH_2COO—(CH_2CH_2O)_n—R$$

3. An aqueous functional fluid as claimed in claim 1, which is a hydraulic fluid and contains 1 to 40 % by weight of the copolymers.

4. An aqueous functional fluid as claimed in claim 1, which is a metal-working fluid and contains 0.3 to 20 % by weight of the copolymers.

## Revendications

1. Fluides fonctionnels aqueux caractérisés en ce qu'ils contiennent un copolymère préparé par copolymérisation en solution ou en émulsion, amorcées par des radicaux, de monomères insaturés copolymérisables, puis neutralisation éventuelle, partielle ou totale, des radicaux acides libres du copolymère par addition de bases, le copolymère étant constitué :

a) de 1 à 60 % en poids, de préférence de 5 à 45 % en poids, d'acides monocarboxyliques éthyléniques en $C_3$-$C_5$, d'acides dicarboxyliques éthyléniques en $C_4$-$C_6$ ou d'hémiesters dérivant de ces acides dicarboxyliques et d'alcools aliphatiques en $C_1$-$C_8$, ou de mélanges de ces monomères, de préférence d'acide méthacrylique, d'acide acrylique, d'acide crotonique, d'acide maléique, d'un maléate de monoalkyle ou de mélanges de ceux-ci,

b) de 0,5 à 30 % en poids d'un ester insaturé surfactif répondant à la formule générale I :

$$R^1-CH=\underset{}{\overset{R^2}{\overset{|}{C}}}-\overset{O}{\overset{\|}{C}}-O-(CH_2-CH_2-O)_n-R \qquad (I)$$

dans laquelle

n désigne un nombre de 2 à 100,

$R^1$ et $R^2$ représentent chacun l'hydrogène ou un méthyle, $R^1$ représentant de préférence un méthyle et $R^2$ l'hydrogène, et

R représente un radical aliphatique en $C_2$-$C_{30}$, linéaire ou ramifié, un radical mono-, di- ou trialkylphényle dont l'alkyle ou chacun des alkyles contient de 4 à 12 atomes de carbone, un radical de copolymère séquencé répondant à l'une des formules IIa et IIb :

$$-(\underset{\underset{CH_3}{|}}{CH}-CH_2-O)_m-(CH_2-CH_2-O)_p-R^3 \qquad (IIa)$$

$$-(CH_2-\underset{\underset{CH_3}{|}}{CH}-O)_m-(CH_2-CH_2-O)_p-R^3 \qquad (IIb)$$

dans lesquelles m désigne un nombre de 10 à 100, p un nombre de 0 à 100 et $R^3$ l'hydrogène, un crotyle, un alkyle en $C_1$-$C_{20}$, un phényle ou un alkylphényle à alkyles en $C_1$-$C_{20}$, ou un radical alkyle en $C_1$-$C_{16}$ perfluoré ou partiellement fluoré,

c) de 30 à 85 % en poids d'un ester dérivant de l'acide méthacrylique ou de l'acide acrylique et d'un alcool aliphatique en $C_1$-$C_{18}$, ou d'un mélange de tels esters,

d) de 0 à 40 % en poids d'autres comonomères éthyléniques, qui seront de préférence des esters vinyliques, des composés aromatiques vinyliques, des nitriles éthyléniques, des esters d'acides mono- ou di-carboxyliques éthyléniques, dans la mesure où il ne s'agit pas de ceux dont il a déjà été question ci-dessus sous c), des acides sulfoniques éthyléniques ou des dérivés d'acides sulfoniques éthyléniques,

e) de 0 à 3 % en poids de composés multi-éthyléniques, de préférence de divinylbenzène, de phtalate de diallyle ou de diacrylates ou diméthacrylates du butane-diol, et

f) de 0 à 5 % en poids de régulateurs de masse moléculaire, de préférence de dodécylmercaptan, de tétrakis-mercaptoacétate du pentaérythritol, de tétrachlorure de carbone ou de bromo-trichlorométhane.

2. Fluides fonctionnels aqueux selon la revendication 1, caractérisés en ce qu'ils contiennent un copolymère dans lequel il y a de 0,5 à 30 % en poids d'un ester de l'acide crotonique de formule :

$$CH_3—CH = CH_2COO—(CH_2CH_2O)_n—R$$

3. Fluides fonctionnels aqueux selon la revendication 1, caractérisés en ce qu'ils sont des fluides hydrauliques et qu'ils contiennent de 1 à 40 % en poids des copolymères.

4. Fluides fonctionnels aqueux selon la revendication 1, caractérisés en ce qu'ils sont des liquides pour l'usinage de métaux et qu'ils contiennent de 0,3 à 20 % en poids des copolymères.